(19) Europäisches Patentamt
European Patent Office
Office européen des brevets

(11) **EP 4 640 596 A1**

(12) **EUROPEAN PATENT APPLICATION**
published in accordance with Art. 153(4) EPC

(43) Date of publication:
**29.10.2025 Bulletin 2025/44**

(21) Application number: **23906787.9**

(22) Date of filing: **08.12.2023**

(51) International Patent Classification (IPC):
**B65G 43/08** (2006.01)    **B65G 43/00** (2006.01)

(52) Cooperative Patent Classification (CPC):
**B65G 43/00; B65G 43/08**

(86) International application number:
**PCT/JP2023/044112**

(87) International publication number:
**WO 2024/135421 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 JP 2022203658**

(71) Applicant: **IAI Corporation
Shimizu-shi, Shizuoka 424-0114 (JP)**

(72) Inventors:
• **SAKAMOTO, Hiroyuki
Shizuoka-shi, Shizuoka 424-0114 (JP)**
• **TASAKI, Takato
Shizuoka-shi, Shizuoka 424-0114 (JP)**
• **YAMANO, Koji
Shizuoka-shi, Shizuoka 424-0114 (JP)**

(74) Representative: **Berggren Oy
P.O. Box 16
Fabianinkatu 21
00101 Helsinki (FI)**

(54) **CONVEYOR DEVICE**

(57)    A conveyor apparatus includes: a conveyance path provided with a plurality of conveyance rollers that convey, along a conveyance direction of conveyed objects, the conveyed objects; and distance measuring sensors that measure, from upstream to downstream on the conveyance path, distances to the conveyed objects conveyed on the conveyance path, wherein the conveyance rollers are formed by drive rollers connected to motors controlled by a control unit and free rollers that freely rotate, the conveyance path is divided into a plurality of zones each including at least one of the drive rollers and a plurality of the free rollers, and the distance measuring sensors are disposed every predetermined number of zones among the plurality of zones.

FIG.1

**Description**

TECHNICAL FIELD

The present disclosure relates to a conveyor apparatus.

BACKGROUND ART

For example, JP-A No. H11-199030 discloses a conveyor apparatus that includes a drive roller, free rollers, and a photoelectric sensor in each zone in a conveyance direction and detects whether there is or is not a conveyed object in each zone.

SUMMARY

Technical Problem

However, when a sensor is provided in each zone, a large amount of sensors are needed on the entire conveyance path.

The present disclosure has been devised in consideration of the above circumstances, and it is an object thereof to provide a conveyor apparatus that can reduce the number of sensors by doing away with providing a sensor in each zone.

Solution to Problem

A conveyor apparatus pertaining to a first aspect includes: a conveyance path provided with a plurality of conveyance rollers that convey, along a conveyance direction of conveyed objects, the conveyed objects; and distance measuring sensors that measure, from upstream to downstream on the conveyance path, distances to the conveyed objects conveyed on the conveyance path, wherein the conveyance rollers are formed by drive rollers connected to motors controlled by a control unit and free rollers that freely rotate, the conveyance path is divided into a plurality of zones each including at least one of the drive rollers and a plurality of the free rollers, and the distance measuring sensors are disposed every predetermined number of zones among the plurality of zones.

According to the first aspect, there can be provided a conveyor apparatus that can reduce the number of sensors by doing away with providing a sensor in each zone. Because of this, product costs and manufacturing costs can be reduced.

Furthermore, in a conveyor apparatus pertaining to a second aspect, the distance measuring sensors are disposed every predetermined distance along the conveyance direction on the conveyance path.

According to the second aspect, there can be provided a conveyor apparatus in which the distance measuring sensors can be disposed on the conveyance path in accordance with the measurement range of the distance measuring sensors. Because of this, the distance measuring sensors can be efficiently disposed.

Furthermore, in a conveyor apparatus pertaining to a third aspect, the control unit calculates positions of the conveyed objects on the conveyance path based on measurement results of the distance measuring sensors.

According to the third aspect, there can be provided a conveyor apparatus that can convey the conveyed objects after identifying where the conveyed objects are on the conveyance path.

Furthermore, a conveyor apparatus pertaining to a fourth aspect includes, upstream on the conveyance path, size measuring sensors that measure at least sizes on the conveyance direction sides of the conveyed objects.

According to the fourth aspect, there can be provided a conveyor apparatus that can simultaneously convey even conveyed objects of different sizes.

Furthermore, in a conveyor apparatus pertaining to a fifth aspect, the control unit controls the motors in accordance with the sizes on the conveyance direction sides of the conveyed objects that have been measured by the size measuring sensors.

According to the fifth aspect, there can be provided a conveyor apparatus that can identify the positions of conveyance direction leading end sides and trailing end sides of the conveyed objects on the conveyance path.

Furthermore, in a conveyor apparatus pertaining to a sixth aspect, the control unit performs accumulation control to convey the conveyed objects so as to reduce the spacing between them on the conveyance path.

According to the sixth aspect, there can be provided a conveyor apparatus that can convey even conveyed objects of different sizes so as to reduce the spacing between them.

Furthermore, in a conveyor apparatus pertaining to a seventh aspect, the control unit calculates placement angles of the conveyed objects on the conveyance path based on measurement results of the distance measuring sensors.

According to the seventh aspect, there can be provided a conveyor apparatus that can identify that the conveyed objects are placed obliquely in the conveyance direction.

Furthermore, in a conveyor apparatus pertaining to an eighth aspect, the distance measuring sensors are disposed on arch portions installed from one side to the other side of a frame that rotatably holds the conveyance rollers from both sides.

According to the eighth aspect, there can be provided a conveyor apparatus that can increase the range measurable by one distance measuring sensor compared with disposing the distance measuring sensors on the frame of the conveyor apparatus.

Furthermore, in a conveyor apparatus pertaining to a ninth aspect, the distance measuring sensors are disposed between the conveyance rollers.

According to the ninth aspect, there can be provided a conveyor apparatus that can increase the range measurable by one distance measuring sensor compared with disposing the distance measuring sensors on the frame of the conveyor apparatus.

Advantageous Effects of Invention

As described above, according to the present disclosure, there is obtained the advantageous effect of being able to provide a conveyor apparatus that can reduce the number of sensors.

BRIEF DESCRIPTION OF DRAWINGS

FIG 1 is a plan view schematically showing an example of the configuration of a conveyor apparatus pertaining to an embodiment.

FIG 2 is a block diagram showing an example of the electrical configuration of a control unit with which a control apparatus pertaining to the embodiment is equipped.

FIG 3 is an explanatory drawing describing the measurement of distances to conveyed objects by ultrasonic sensors pertaining to the embodiment.

FIG 4 is an explanatory drawing describing the measurement of distances to the conveyed objects by the control unit pertaining to the embodiment.

FIG 5 is an explanatory drawing describing an example of the conveyance of the conveyed objects by the control unit pertaining to the embodiment.

FIG 6 is a plan view schematically showing an example of the configuration of the conveyor apparatus using laser ToF sensors pertaining to the embodiment.

FIG 7A is a front elevation view schematically showing an example of the configuration of the conveyor apparatus when the laser ToF sensors pertaining to the embodiment are disposed on arch portions.

FIG 7B is a side view schematically showing an example of the configuration of the conveyor apparatus when the laser ToF sensors pertaining to the embodiment are disposed on the arch portions.

FIG 8A is a plan view schematically showing an example of the configuration of the conveyor apparatus when the laser ToF sensors pertaining to the embodiment are disposed between conveyance rollers.

FIG 8B is a side view schematically showing an example of the configuration of the conveyor apparatus when the laser ToF sensors pertaining to the embodiment are disposed between the conveyance rollers.

FIG 9 is an explanatory drawing describing the measurement of distances to the conveyed objects by the laser ToF sensors that are multi-zone sensors pertaining to the embodiment.

FIG 10 is an explanatory drawing describing the measurement of placement angles of the conveyed objects when the laser ToF sensors that are multi-zone sensors pertaining to the embodiment are disposed on a frame.

FIG 11 is an explanatory drawing describing the measurement of placement angles of the conveyed objects when the laser ToF sensors that are multi-zone sensors pertaining to the embodiment are disposed between the rollers.

FIG 12 is an explanatory drawing describing the measurement of distances to the conveyed objects by the laser ToF sensors that are single zone sensors pertaining to the embodiment.

FIG 13 is an explanatory drawing describing the measurement of placement angles of the conveyed objects when the laser ToF sensors that are single zone sensors pertaining to the embodiment are disposed on the frame.

FIG 14 is an explanatory drawing describing the measurement of placement angles of the conveyed objects when the laser ToF sensors that are single zone sensors pertaining to the embodiment are disposed between the rollers.

DESCRIPTION OF EMBODIMENTS

An example of an embodiment of the present disclosure will be described below with reference to the drawings. It will be noted that identical reference signs are assigned to identical or equivalent components and parts in the drawings. Furthermore, dimensional ratios in the drawings are exaggerated for convenience of description and may differ from actual ratios.

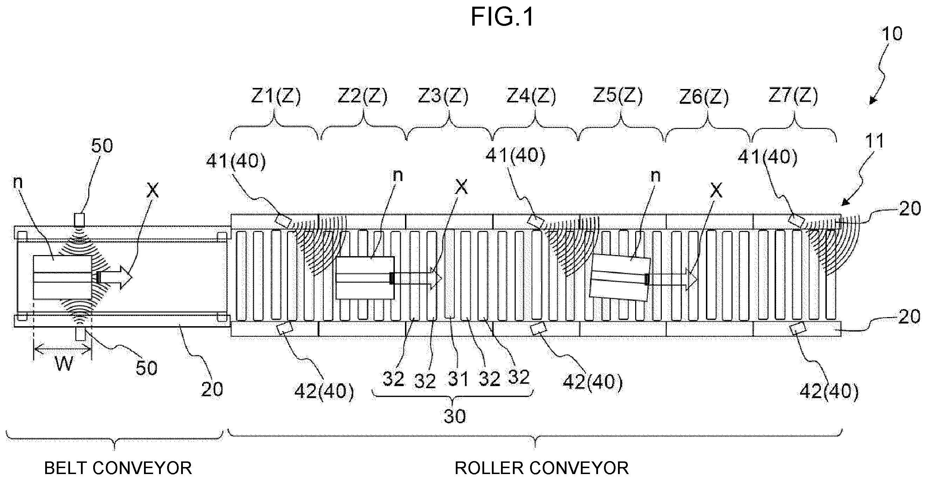

FIG 1 is a plan view schematically showing an example of the configuration of a conveyor apparatus 10 pertaining to the present embodiment.

As shown in FIG 1, the conveyor apparatus 10 includes a conveyance path 11 (a frame 20 and a plurality of conveyance rollers 30) and a control unit 100. It will be noted that although the part of the conveyor apparatus 10 shown in FIG 1 that is upstream in a conveyance direction X of conveyed objects n and to which the conveyed objects n are fed is configured by a belt conveyor and the part that is downstream in the conveyance direction X is configured by a roller conveyor, the conveyor apparatus 10 is not limited to this and may also be entirely configured by a roller conveyor for example.

The frame 20 extends in the conveyance direction X of the conveyed objects n and rotatably holds the plural conveyance rollers 30 from both sides. The conveyance rollers 30 are formed in cylindrical shapes, and the conveyed objects n are placed thereon. Here, the conveyance rollers 30 are formed by drive rollers 31 connected to motors and free rollers 32 that freely rotate.

The conveyance path 11 is divided into a plurality of zones Z each including one of the drive rollers 31 and a plurality (in this example, four) of the free rollers 32. Furthermore, although the drawings do not show this, the drive roller 31 and the free rollers 32 in each of the zones Z are coupled together by a belt that transmits the rotation of the drive roller 31 to the free rollers 32.

Furthermore, the frame 20 includes size measuring sensors 50 and ultrasonic sensors 40. Here, the ultrasonic sensors 40 are an example of distance measuring sensors.

The size measuring sensors 50 are sensors that measure at least sizes W on the conveyance direction X sides of the conveyed objects n. Furthermore, the size measuring sensors 50 are disposed upstream on the conveyance path 11 and desirably upstream of all the ultrasonic sensors 40.

The size measuring sensors 50 detect whether there is or is not a conveyed object n by transmitting, to the conveyed objects n conveyed on the conveyance path 11, ultrasonic waves in a direction orthogonal to the conveyance direction X of the conveyed objects n. Additionally, the control unit 100 measures the sizes W on the conveyance direction X sides of the conveyed objects n from the conveyance speed of the conveyed objects n and the times when it was detected by the ultrasonic sensors that there was a conveyed object n. It will be noted that the type and method of the size measuring sensors 50 do not matter as long as they can detect the sizes W of the conveyed objects n.

The ultrasonic sensors 40 measure, from upstream to downstream on the conveyance path 11, distances to the conveyed objects n conveyed on the conveyance path 11. Furthermore, the ultrasonic sensors 40 are disposed every predetermined number of zones Z among the plurality of zones Z. That is, the ultrasonic sensors 40 are not provided in all the zones Z; rather, one set of the ultrasonic sensors 40 is disposed with respect to a plurality of the zones Z (in the present embodiment, three of the zones Z).

Furthermore, as shown in FIG 1, the ultrasonic sensors are configured by transmitting sensors 41 disposed on one of the left and right sides and receiving sensors 42 disposed on the other side along the conveyance direction X on the conveyance path 11. Additionally, the transmitting sensors 41 and the receiving sensors 42 are obliquely disposed so as to face the left and right direction center side of the conveyance path 11.

It will be noted that the ultrasonic sensors 40 are not limited to a case where one set is disposed with respect to three of the zones Z and can be changed in accordance with the range reached by the ultrasonic waves of the ultrasonic sensors 40; in the case of sensors whose ultrasonic waves reach a long distance, one set of the ultrasonic sensors 40 may be disposed with respect to four or more of the zones Z. That is, it can also be said that the ultrasonic sensors 40 are disposed every predetermined distance along the conveyance direction X on the conveyance path 11.

The control unit 100 calculates distances from midpoints between the transmitting sensors 41 and the receiving sensors 42 to the conveyed objects n based on measurement results of the ultrasonic sensors 40. Additionally, the control unit 100 calculates, from those distances, positions of the conveyed objects n on the conveyance path 11. Specifically, the control unit 100 calculates the positions of the conveyed objects n on the conveyance path 11 based on the positions where the ultrasonic sensors 40 are disposed and the distances it calculated based on the measurement results.

Furthermore, the control unit 100 controls the motors that drive the drive rollers 31. Specifically, the control unit 100 controls the motors in accordance with the sizes W on the conveyance direction X sides of the conveyed objects that have been measured by the size measuring sensors 50.

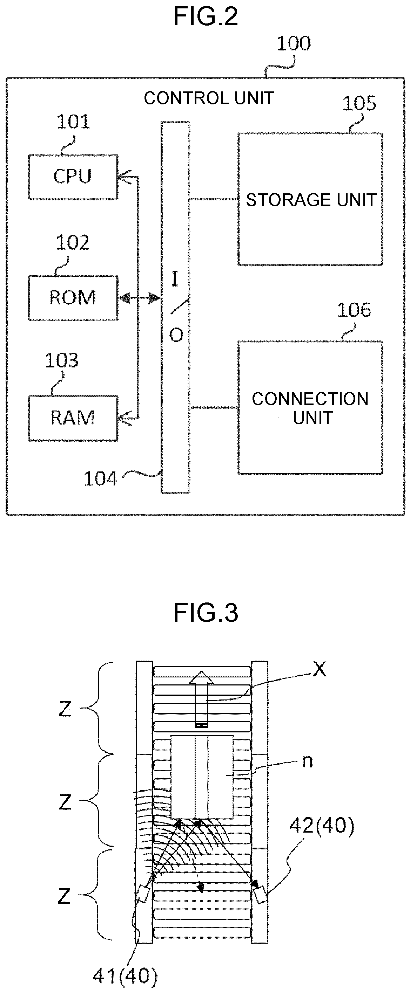

FIG 2 is a block diagram showing an example of the electrical configuration of the control unit 100 pertaining to the present embodiment.

As shown in FIG 2, the control unit 100 of the conveyor apparatus 10 pertaining to the present embodiment includes a central processing unit (CPU) 101, a read-only memory (ROM) 102, a random-access memory (RAM) 103, an input/output interface (I/O) 104, a storage unit 105, and a connection unit 106.

The CPU 101, the ROM 102, the RAM 103, and the I/O 104 are connected to each other via a bus. Connected to the I/O 104 are functional units including the storage unit 105 and the connection unit 106. These functional units can communicate with the CPU 101 via the I/O 104.

The CPU 101, the ROM 102, the RAM 103, and the I/O 104 configure, for example, a microcomputer (microcomputer). The microcomputer may be configured as a sub-control unit that controls some of the operations of the control unit 100 or may be configured as a part of a main control unit that controls the operations of the entire control unit 100. For example, a large-scale integration (LSI) or other integrated circuit or integrated circuit (IC) chip set is used for part or all of each block of the microcomputer. Individual circuits may also be used for each of the above blocks, or a circuit in which some or all of the blocks are integrated may also be used. The above blocks may be provided integrally, or some of the blocks may be provided separately. Furthermore, parts of each of the above blocks may be provided separately. The integration of the microcomputer is not limited to LSI, and a dedicated circuit or a general-purpose processor may also be used.

As the storage unit 105, for example, a hard disk drive (HDD), a solid-state drive (SSD), or flash memory is used. The ROM 102 or the storage unit 105 stores a control program for controlling the motors, various types of setting values needed to control the motors, and data tables for example.

The control program may, for example, be preinstalled in the control unit 100. The control program may also be realized by storing it in a nonvolatile storage medium or distributing it via a network and appropriately installing it in the control unit 100. It will be noted that examples of the nonvolatile storage medium include a compact disc read-only memory (CD-ROM), a magneto-optical disc, a HDD, a digital versatile disc read-only memory (DVD-ROM), flash memory, and a memory card.

The connection unit 106 is an interface for connecting to devices such as the size measuring sensors 50, the ultrasonic sensors 40, and the motors.

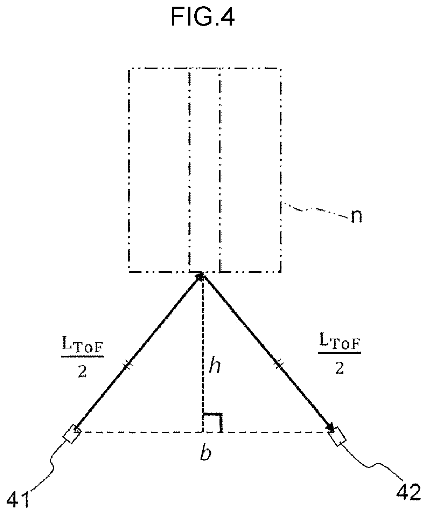

Next, a method of measuring the distances to the conveyed objects n using the ultrasonic sensors 40 as the distance measuring sensors will be described using FIG 3 and FIG 4.

First, as shown in FIG 3, the control unit 100 transmits ultrasonic waves from the transmitting sensor 41. The ultrasonic waves are radially transmitted and nondirectional. Then, the control unit 100 receives, with the receiving sensor 42, the ultrasonic waves specularly reflected by the conveyed object n. As shown in FIG 4, the distance from the transmitting sensor 41 to the conveyed object n is considered the same as the distance from the conveyed object n to the receiving sensor 42. Then, the control unit 100 calculates a distance h from the midpoint between the transmitting sensor 41 and the receiving sensor 42 to the conveyed object n based on the following Equation 1 of the Pythagorean theorem. [Equation 1]

$$h = \sqrt{\left(\frac{L_{ToF}}{2}\right)^2 - \left(\frac{b}{2}\right)^2} \qquad (1)$$

Here, h represents the vertical distance from the midpoint between the transmitting sensor 41 and the receiving sensor 42 to the conveyed object n, $L_{Tof}$ represents the distance from the transmitting sensor 41 and from the receiving sensor 42 to the conveyed object n, and b represents the distance between the transmitting sensor 41 and the receiving sensor 42.

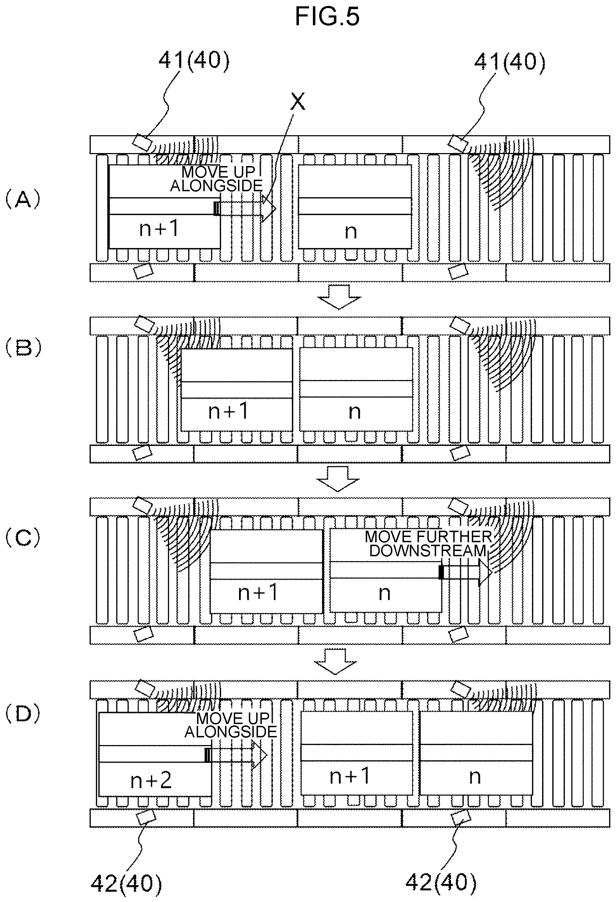

Next, an example of the conveyance of the conveyed objects n by the control unit 100 will be described using FIG 5.

The control unit 100 of the present embodiment performs accumulation control to convey the conveyed objects n so as to move them closer in the conveyance direction X to the conveyed objects n that were conveyed on the conveyance path 11 before those conveyed objects n.

Specifically, although the drawings do not show this, when the control unit 100 detects a first conveyed object n in a state in which there are no conveyed objects n on the conveyance path 11, it controls the motors to convey the conveyed object n to a predetermined position. The control unit 100 calculates the predetermined position by measuring with the ultrasonic sensors 40 the distance to the conveyed object n being conveyed. When the distance to the upstream end portion of the conveyed object n reaches the predetermined position, the control unit 100 performs control to stop the motors.

Thereafter, as shown in (A) in FIG 5, when the control unit 100 conveys a second conveyed object n+1 in a state in which the conveyed object n is stopped on the conveyance path 11, it calculates the distance to the conveyed object n using the ultrasonic sensors 40. The control unit 100 calculates the position of the conveyed object n on the conveyance path 11 based on the distance to the conveyed object n. It will be noted that the control unit 100 may also store the distance to the conveyed object n that it measured when it conveyed the first conveyed object n and calculate the position of the conveyed object n based on the stored distance. The control unit 100 controls the motors in accordance with the distance to convey the conveyed object n+1 (move up alongside). Here, when the control unit 100 conveys the conveyed object n+1 without allowing it to collide with the conveyed object n, it needs to acquire the size W on the conveyance direction X side of the conveyed object n. This is because the distance the control unit 100 conveys the conveyed object n+1 changes depending on the size W on the conveyance direction X side of the conveyed object n+1. In the present embodiment, the control unit 100 measures, with the size measuring sensors 50, at least the sizes W on the conveyance direction X sides of the conveyed objects n that have been placed on the conveyance path 11. It will be noted that the control unit 100 is not limited to measuring the sizes W of the conveyed objects n with the size measuring sensors 50 and may also acquire the sizes W by other methods, such as for example by receiving input of the sizes W of the conveyed objects n by a user or by reading barcodes in which the sizes W are recorded.

Next, as shown in (B) in FIG 5, the ultrasonic sensors 40 calculate the distance to convey the conveyed object n+1 based on the distance to the conveyed object n+1 and the size W on the conveyance direction side of the conveyed object n+1 and convey the conveyed object n+1 to a position disposed close to the conveyed object n in the conveyance direction X (move up alongside). Specifically, the control unit 100 conveys the conveyed object n+1 a distance obtained by subtracting a predetermined spacing between the conveyed objects n and the size W of the conveyed object n+1 from the distance to the upstream end portion of the conveyed object n+1.

Next, as shown in (C) of FIG 5, the control unit 100 conveys the conveyed object n and the conveyed object n+1 a predetermined distance in the conveyance direction X (move further downstream). The predetermined distance is calculated based on the distance to the upstream end portion of the conveyed object n+1 conveyed measured by the ultrasonic sensor 40.

Next, as shown in (D) in FIG 5, the control unit 100, as in (A), conveys a conveyed object n+2 close to the conveyed item n+1 (move up alongside). It will be noted that although the control unit 100 calculates the distance to the conveyed item n+1 in (C) above, it may also calculate the distance when conveying the conveyed item n+2.

The control unit 100 repeats the accumulation control shown in FIG 5 to convey the conveyed objects n. In this way, in the present embodiment, the control unit 100 can convey the conveyed objects n so as to reduce the spacing between them, thus making it possible to simultaneously convey many of the conveyed objects n compared with the prior art that can only convey one conveyed object in one zone Z.

Furthermore, although in the above embodiment description was given using the ultrasonic sensors 40 as the distance measuring sensors, other sensors, such as laser time-of-flight (ToF) sensors 40A for example, may be used.

A case where the laser ToF sensors 40A are used as the distance measuring sensors will be described below.

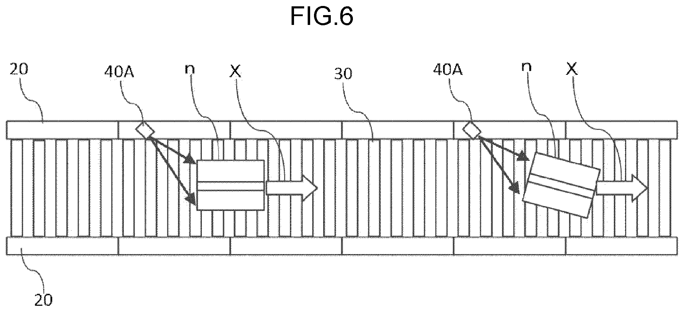

When the laser ToF sensors 40A are used as the distance measuring sensors, as shown in FIG 6, they are disposed on the frame 20 on one of the left and right sides (the left side in FIG 6) of the conveyance direction X on the conveyance path 11.

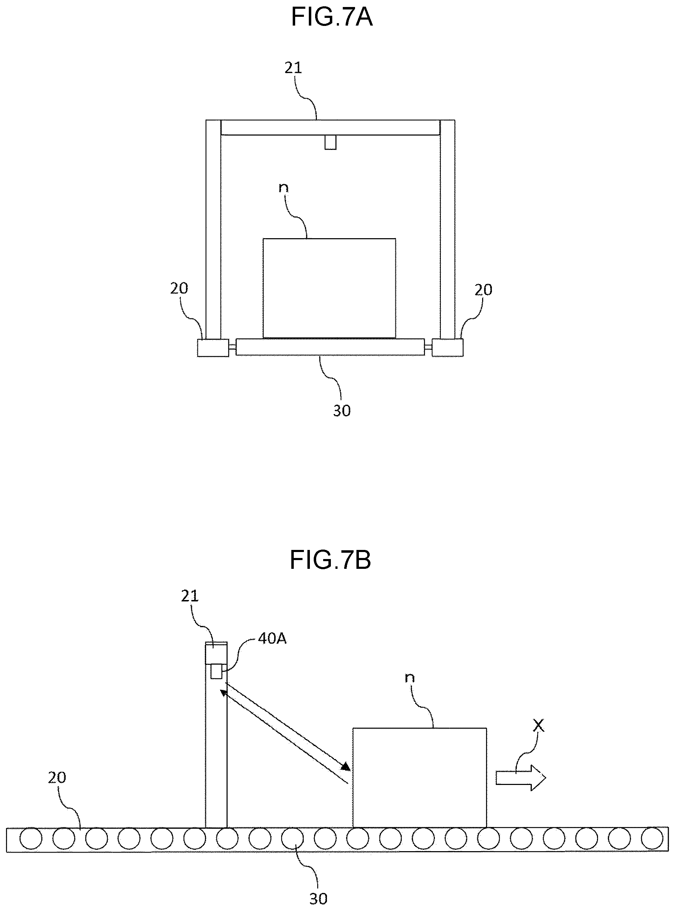

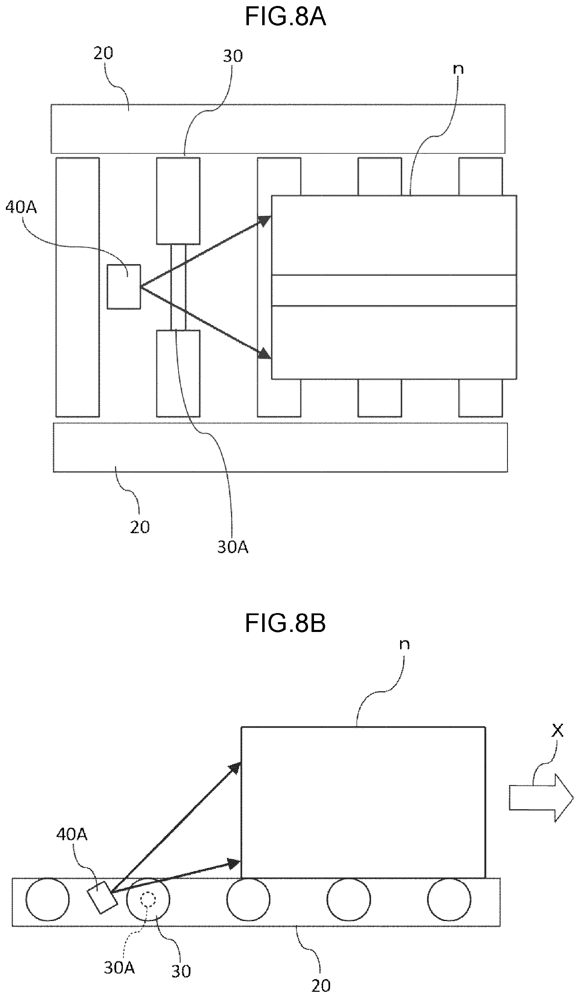

It will be noted that when the laser ToF sensors 40A are used as the distance measuring sensors, they are not limited to being disposed on the frame 20 as shown in FIG 6. For example, as shown in FIG 7A and FIG 7B, the laser ToF sensors 40A may also be disposed on arch portions 21 installed straddling the conveyance rollers 30 from one side of the frame 20 to the other side. In this case, the conveyed objects n pass under the arch portions 21. Furthermore, for example, as shown in FIG 8A and FIG 8B, the laser ToF sensors 40A may also be disposed between the conveyance rollers 30 that are disposed one after the other in the conveyance direction X. In this case, the conveyance rollers 30 that are adjacent to the laser ToF sensors 40A on the downstream sides thereof in the conveyance direction X each include a cutout portion 30A by which the outer diameter of the conveyance roller 30 is reduced. The cutout portions 30A ensure that the lasers emitted toward the conveyed objects n from the laser ToF sensors 40A are not obstructed. Here, disposing the laser ToF sensors 40A on the arch portions 21 (FIG 7A and FIG 7B) or disposing the laser ToF sensors 40A between the conveyance rollers 30 (FIG 8A and FIG 8B) makes it possible to increase the range measurable by one laser ToF sensor 40A compared with disposing the laser ToF sensors 40A on the frame 20. This is because when the laser ToF sensors 40A are disposed on the frame 20, they measure the distances to the conveyed objects n obliquely from behind the conveyed objects n, whereas when they are disposed on the arch portions 21 or between the conveyance rollers 30, they measures the distances to the conveyed objects n from directly behind the conveyed objects n. For this reason, it also becomes possible to reduce the number of the laser ToF sensors 40A disposed on the conveyance path 11.

Furthermore, the laser ToF sensors 40A include multi-zone sensors with which multiple zones can be measured by one sensor and single zone sensors with which single zones can be measured. A case where multi-zone sensors are used as the laser ToF sensors 40A and a case where single zone sensors are used as the laser ToF sensors 40A will be separately described below.

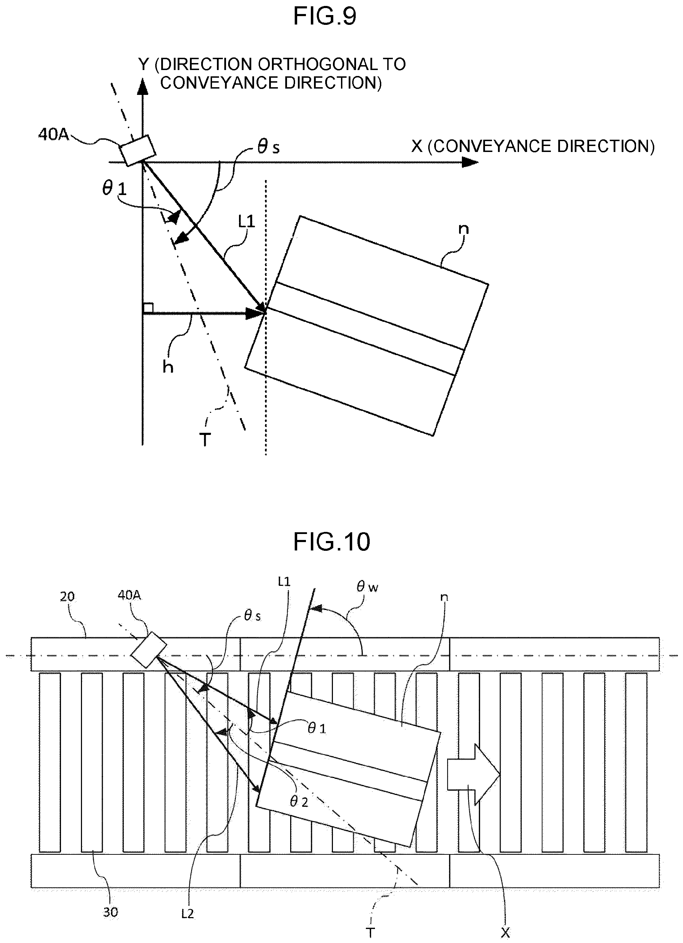

First, a method of measuring the distances h to the conveyed objects n using multi-zone sensors as the laser ToF sensors 40A will be described using FIG 9 and Equation 2.

[Equation 2]

$$h = L_1 \cos\ (\theta_s + \theta_1) \qquad (2)$$

Here, h represents the vertical distance from the position where the laser ToF sensor 40A is provided to the conveyed object n, $L_1$ represents the distance to the conveyed object n in the zone in which the laser ToF sensor 40A has detected the conveyed object n, $\theta s$ represents the angle between the conveyance direction X and a central axis T of the laser ToF sensor 40A, and $\theta_1$ represents the angle from the central axis T of the laser ToF sensor 40A to the zone in which the conveyed object n was detected. Here, $\theta s$ can be identified by the control unit 100 by installing the laser ToF sensors 40A at a predetermined angle when the laser ToF sensors 40A are set up or by measuring and inputting the angle when the laser ToF sensors 40A are set up.

It will be noted that this equation is the same whether the laser ToF sensors 40A are disposed on the frame 20 (see FIG 6), on the arch portions 21 (see FIG 7A and FIG 7B), or between the conveyance rollers 30 (see FIG 8A and FIG 8B).

By using Equation 2, the control unit 100 can measure the distances h to the conveyed objects n when the laser ToF sensors 40A that are multi-zone sensors are used.

Next, calculation of placement angles $\theta_w$ of the conveyed objects n on the conveyance path 11 relative to the conveyance direction X when multi-zone sensors are used as the laser ToF sensors 40A will be described.

First, calculation of the placement angles $\theta_w$ of the conveyed objects n on the conveyance path 11 relative to the conveyance direction X when the laser ToF sensors 40A that are multi-zone sensors are disposed on the frame 20 will be described using FIG 10 and Equation 3.

[Equation 3]

$$\theta_w = \arctan \left[ \frac{L_1 \sin(\theta_s + \theta_1) - L_2 \sin(\theta_s + \theta_2)}{L_1 \cos(\theta_s + \theta_1) - L_2 \cos(\theta_s + \theta_2)} \right] \qquad (3)$$

Here, $\theta_w$ represents the placement angle of the conveyed object n relative to the conveyance direction X, $L_1$ represents the distance to the conveyed object n in a first zone in which the laser ToF sensor 40A has detected the conveyed object n, $L_2$ represents the distance to the conveyed object n in a second zone in which the laser ToF sensor 40A has detected the conveyed object n, $\theta s$ represents the angle between the conveyance direction X and the central axis T of the laser ToF sensor 40A, $\theta_1$ represents the angle from the central axis T of the laser ToF sensor 40A to the first zone in which the conveyed object n was detected, and $\theta_2$ represents the angle from the central axis T of the laser ToF sensor 40A to the second zone in which the conveyed object n was detected. Furthermore, the first zone and the second zone are different zones among the zones measurable by the multi-zone sensor.

By using Equation 3, the control unit 100 can calculate the placement angles $\theta_w$ of the conveyed objects n relative to the conveyance direction X when the laser ToF sensors 40A that are multi-zone sensors are disposed on the frame 20.

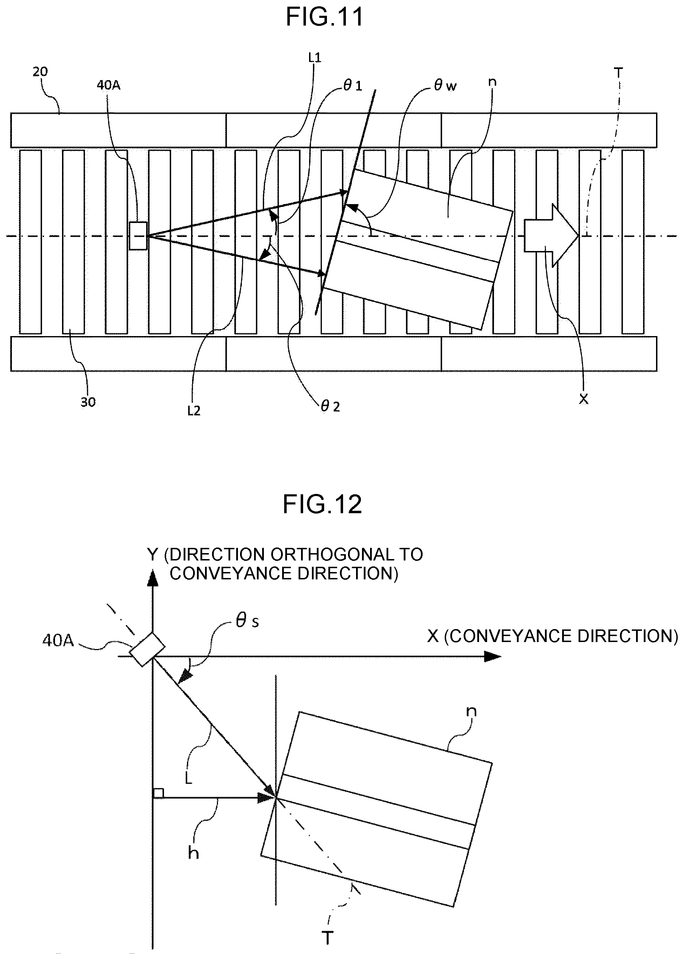

Next, calculation of the placement angles $\theta_w$ of the conveyed objects n on the conveyance path 11 relative to the conveyance direction X when the laser ToF sensors 40A that are multi-zone sensors are disposed on the arch portions 21 or between the conveyance rollers 30 will be described using FIG 11 and Equation 4.

[Equation 4]

$$\theta_w = \arctan \left[ \frac{L_1 \sin(\theta_1) - L_2 \sin(\theta_2)}{L_1 \cos(\theta_1) - L_2 \cos(\theta_2)} \right] \qquad (4)$$

Here, $\theta_w$ represents the placement angle of the conveyed object n relative to the conveyance direction X, $L_1$ represents the distance to the conveyed object n in a first zone in which the laser ToF sensor 40A has detected the conveyed object n, $L_2$ represents the distance to the conveyed object n in a second zone in which the laser ToF sensor 40A has detected the conveyed object n, $\theta s$ represents the angle between the conveyance direction X and the central axis T of the laser ToF sensor 40A, $\theta_1$ represents the angle from the central axis T of the laser ToF sensor 40A to the first zone in which the conveyed object n was detected, and $\theta_2$ represents the angle from the central axis T of the laser ToF sensor 40A to the second zone in which the conveyed object n was detected. Furthermore, the first zone and the second zone are different zones among the zones measurable by the multi-zone sensor.

By using Equation 4, the control unit 100 can calculate the placement angles $\theta_w$ of the conveyed objects n relative to the conveyance direction X when the laser ToF sensors 40A that are multi-zone sensors are disposed on the arch portions 21 or between the conveyance rollers 30.

Furthermore, the control unit 100 may also correct the positions of the conveyed objects n using the placement angles it has calculated. In particular, when the conveyed objects n are rectangular and obliquely conveyed relative to the conveyance direction X, the corner portions that become the upstream end portions of the conveyed objects n will be positioned upstream of the calculated positions of the conveyed objects n. Furthermore, the corner portions that become the downstream end portions of the conveyed objects n will be positioned downstream of the calculated positions of the conveyed objects n. For that reason, in the accumulation control, by conveying the conveyed objects n with a wider spacing between them than there is when the conveyed objects n are not being obliquely conveyed, it becomes possible to ensure that the conveyed objects n do not collide with the conveyed objects n that are in front of and in back of them on the conveyance path 11. Furthermore, configuring the control unit 100 in this way makes it possible to calculate the positions of the conveyed objects n particularly when the placement angles change as the conveyed objects n are being conveyed.

Furthermore, in this correction of the positions of the conveyed objects n, if the width direction sizes of the rectangular conveyed objects n are known beforehand or can be detected by a sensor, the approximate positions of the corner portions that are positioned rearmost can be calculated from the placement angles. For that reason, the distance from the rearmost corner portion of the conveyed object n to the upstream end portion of the conveyed object n+1 becomes calculable. Configuring the control unit 100 in this way makes it possible in the accumulation control to convey the conveyed objects n so as to reduce the spacing between them without the conveyed objects n colliding with the conveyed objects n that are in front of and in back of them on the conveyance path 11 even when the conveyed objects n are being obliquely conveyed.

Furthermore, the control unit 100 may also change the spacing between the conveyed objects n in the accumulation control in accordance with the placement angles. For example, it is conceivable for the control unit 100 to perform the accumulation control so as increase the spacing by 5 centimeters (cm) when the conveyed objects n are inclined 5 degrees and to perform the accumulation control so as to increase the spacing by 10 cm when the conveyance objects n are inclined 10 degrees. Furthermore, the control unit 100 may also change the spacing in accordance with the width of the conveyance path 11. This is because if the width of the conveyance path 11 is large, the width direction sizes of the conveyed objects n also become larger, and their rear ends change due to inclination.

Next, a method of measuring the distances to the conveyed objects n using single zone sensors as the laser ToF sensors 40A will be described using FIG 12 and Equation 5.

[Equation 5]

$$h = L_1 \cos\theta_s \qquad (5)$$

Here, h represents the vertical distance from the position where the laser ToF sensor 40A is provided to the conveyed object n, $L_1$ represents the distance at which the conveyed object n has been detected in the central axis T of the laser ToF sensor 40A, and θs represents the angle between the conveyance direction X and the central axis T of the laser ToF sensor 40A. Here, θs can be identified by the control unit 100 by installing the laser ToF sensors 40A at a predetermined angle when the laser ToF sensors 40A are set up or by measuring and inputting the angle when the laser ToF sensors 40A are set up.

It will be noted that this equation is the same whether the laser ToF sensors 40A are disposed on the frame 20 (see FIG 6), on the arch portions 21 (see FIG 7A and FIG 7B), or between the conveyance rollers 30 (see FIG 8A and FIG 8B).

By using Equation 5, the control unit 100 can measure the distances h to the conveyed objects n when the laser ToF sensors 40A that are single zone sensors are used.

Next, calculation of the placement angles $θ_w$ of the conveyed objects n on the conveyance path 11 relative to the conveyance direction X when single zone sensors are used as the laser ToF sensors 40A will be described.

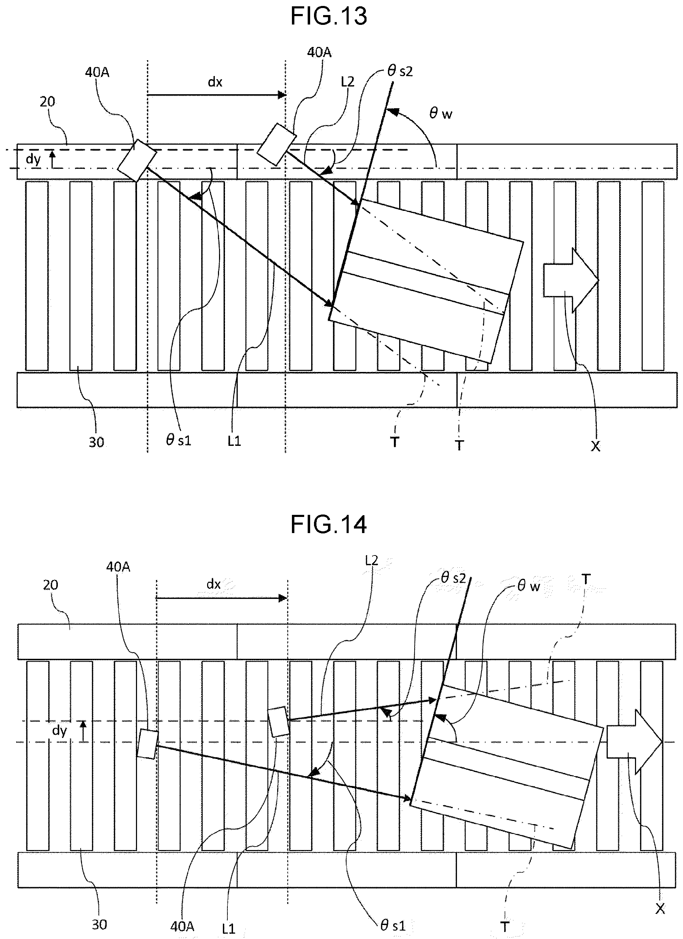

First, a case where the laser ToF sensors 40A that are single zone sensors are disposed on the frame 20 will be described using FIG 13 and Equation 6.

[Equation 6]

$$\theta_w = \arctan\left[\frac{L_1 \sin(\theta_{s1}) - L_2 \sin(\theta_{s2}) - dy}{L_1 \cos(\theta_{s1}) - L_2 \cos(\theta_{s2}) - dx}\right] \qquad (6)$$

Here, $θ_w$ represents the placement angle of the conveyed object n relative to the conveyance direction X, $L_1$ represents the distance to the conveyed object n detected by a first laser ToF sensor 40A, $L_2$ represents the distance to the conveyed object n detected by a second laser ToF sensor 40A, $θ_{S1}$ and $θ_{S2}$ represent the angles of the central axes T of the laser ToF sensors 40A relative to the conveyance direction X, dx represents the installation spacing between the first laser ToF sensor 40A and the second laser ToF sensor 40A in the conveyance direction X, and dy represents the installation spacing between the first laser ToF sensor 40A and the second laser ToF sensor 40A in a direction orthogonal to the conveyance direction X. Furthermore, as shown in FIG 13, the first laser ToF sensor 40A and the second laser ToF sensor 40A are installed in different positions and angles on the frame 20.

By using Equation 6, the control unit 100 can calculate the placement angles $\theta_w$ of the conveyed objects n relative to the conveyance direction X when the laser ToF sensors 40A that are single zone sensors are disposed on the frame 20.

Next, a case where the laser ToF sensors 40A that are single zone sensors are disposed on the arch portions 21 or between the conveyance rollers 30 will be described using FIG 14 and Equation 6.

Here, $\theta_w$ represents the placement angle of the conveyed object n relative to the conveyance direction X, $L_1$ represents the distance to the conveyed object n detected by a first laser ToF sensor 40A, $L_2$ represents the distance to the conveyed object n detected by a second laser ToF sensor 40A, $\theta_{S1}$ and $\theta_{S2}$ represent the angles of the central axes T of the laser ToF sensors 40A relative to the conveyance direction X, dx represents the installation spacing between the first laser ToF sensor 40A and the second laser ToF sensor 40A in the conveyance direction X, and dy represents the installation spacing between the first laser ToF sensor 40A and the second laser ToF sensor 40A in a direction orthogonal to the conveyance direction X. Furthermore, as shown in FIG 14, the first laser ToF sensor 40A and the second laser ToF sensor 40A are installed in different positions and angles.

Furthermore, even when the laser ToF sensors 40A that are single zone sensors are disposed on the arch portions 21 or between the conveyance rollers 30, the control unit 100 can calculate the placement angles $\theta_w$ using Equation 6 which it uses when the laser ToF sensors 40A are disposed on the frame 20.

It will be noted that although description was given using the ultrasonic sensors 40 and the laser ToF sensors 40A as the distance measuring sensors, distance measuring sensors of other distance measuring systems (triangulation, laser interference) may also be used.

A control apparatus pertaining to embodiments has been exemplified and described above. The embodiment may also take the form of programs for causing a computer to execute the functions of the control unit 100. The embodiment may also take the form of a non-transitory storage medium that can store these programs and is readable by a computer.

In addition, the configuration of the conveyor apparatus described in the above embodiment is an example and may be changed depending on the situation without departing from its spirit.

Furthermore, in the above embodiment, a case was described where, by executing a program, processes pertaining to the embodiment are realized by software configurations using a computer, but the embodiment is not limited to this. The embodiment may also be realized by, for example, hardware configurations or a combination of hardware configurations and software configurations.

The disclosure of Japanese Patent Application No. 2022-203658, filed on December 20, 2022, is incorporated herein by reference.

All documents, patent applications, and technical standards mentioned in this specification are incorporated herein by reference to the same extent as if each individual document, patent application, or technical standard were specifically and individually indicated to be incorporated by reference.

The following addenda are disclosed in relation to the technology of the present disclosure.

<Addenda>

(Addendum 1)

A conveyor apparatus comprising:

a conveyance path provided with a plurality of conveyance rollers that convey, along a conveyance direction of conveyed objects, the conveyed objects; and
distance measuring sensors that measure, from upstream to downstream on the conveyance path, distances to the conveyed objects conveyed on the conveyance path,
wherein the conveyance rollers are formed by drive rollers connected to motors controlled by a control unit and free rollers that freely rotate,
the conveyance path is divided into a plurality of zones each including at least one of the drive rollers and a plurality of the free rollers, and
the distance measuring sensors are disposed every predetermined number of zones among the plurality of zones.

(Addendum 2)

The conveyor apparatus of addendum 1, wherein the distance measuring sensors are disposed every predetermined distance along the conveyance direction on the conveyance path.

(Addendum 3)

The conveyor apparatus of addendum 1 or addendum 2, wherein the control unit calculates positions of the conveyed objects on the conveyance path based on measurement results of the distance measuring sensors.

(Addendum 4)

The conveyor apparatus of any one of addendum 1 to addendum 3, wherein the conveyor apparatus includes, upstream on the conveyance path, size measuring sensors that measure at least sizes on the conveyance direction sides of the conveyed objects.

(Addendum 5)

The conveyor apparatus of addendum 4, wherein the control unit controls the motors in accordance with the sizes on the conveyance direction sides of the conveyed objects that have been measured by the size measuring sensors.

(Addendum 6)

The conveyor apparatus of addendum 5, wherein the control unit performs accumulation control to convey the conveyed objects so as to reduce the spacing between them on the conveyance path.

(Addendum 7)

The conveyor apparatus of any one of addendum 1 to addendum 6, wherein the control unit calculates placement angles of the conveyed objects on the conveyance path based on measurement results of the distance measuring sensors.

(Addendum 8)

The conveyor apparatus of any one of addendum 1 to addendum 7, wherein the distance measuring sensors are disposed on arch portions installed from one side to the other side of a frame that rotatably holds the conveyance rollers from both sides.

(Addendum 9)

The conveyor apparatus of any one of addendum 1 to addendum 7, wherein the distance measuring sensors are disposed between the conveyance rollers.

**Claims**

1. A conveyor apparatus comprising:

   a conveyance path provided with a plurality of conveyance rollers that convey, along a conveyance direction of conveyed objects, the conveyed objects; and
   distance measuring sensors that measure, from upstream to downstream on the conveyance path, distances to the conveyed objects conveyed on the conveyance path,
   wherein the conveyance rollers are formed by drive rollers connected to motors controlled by a control unit and free rollers that freely rotate,
   the conveyance path is divided into a plurality of zones each including at least one of the drive rollers and a plurality of the free rollers, and
   the distance measuring sensors are disposed every predetermined number of zones among the plurality of zones.

2. The conveyor apparatus of claim 1, wherein the distance measuring sensors are disposed every predetermined distance along the conveyance direction on the conveyance path.

3. The conveyor apparatus of claim 1, wherein the control unit calculates positions of the conveyed objects on the conveyance path based on measurement results of the distance measuring sensors.

4. The conveyor apparatus of claim 1, wherein the conveyor apparatus includes, upstream on the conveyance path, size measuring sensors that measure at least sizes on the conveyance direction sides of the conveyed objects.

5. The conveyor apparatus of claim 4, wherein the control unit controls the motors in accordance with the sizes on the conveyance direction sides of the conveyed objects that have been measured by the size measuring sensors.

6. The conveyor apparatus of claim 5, wherein the control unit performs accumulation control to convey the conveyed objects so as to reduce the spacing between them on the conveyance path.

7. The conveyor apparatus of claim 1, wherein the control unit calculates placement angles of the conveyed objects on the conveyance path based on measurement results of the distance measuring sensors.

8. The conveyor apparatus of claim 1, wherein the distance measuring sensors are disposed on arch portions installed from one side to the other side of a frame that rotatably holds the conveyance rollers from both sides.

9. The conveyor apparatus of claim 1, wherein the distance measuring sensors are disposed between the conveyance rollers.

FIG.1

# FIG.2

# FIG.3

# FIG.4

## FIG.5

41(40)                                    41(40)

X

(A)

MOVE UP
ALONGSIDE

n+1          n

(B)

n+1          n

(C)

MOVE FURTHER
DOWNSTREAM

n+1          n

(D)

MOVE UP
ALONGSIDE

n+2          n+1          n

42(40)                                    42(40)

FIG.6

# FIG.7A

# FIG.7B

# FIG.8A

# FIG.8B

# FIG.9

# FIG.10

# FIG.11

# FIG.12

## FIG.13

## FIG.14

## INTERNATIONAL SEARCH REPORT

| International application No. |
|---|
| **PCT/JP2023/044112** |

| A. | CLASSIFICATION OF SUBJECT MATTER |
|---|---|

*B65G 43/08*(2006.01)i; *B65G 43/00*(2006.01)i
FI: B65G43/08 F; B65G43/08 D; B65G43/00 K

According to International Patent Classification (IPC) or to both national classification and IPC

| B. | FIELDS SEARCHED |
|---|---|

Minimum documentation searched (classification system followed by classification symbols)

B65G43/08; B65G43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 11-199030 A (DAIFUKU CO LTD) 27 July 1999 (1999-07-27)<br>entire text, all drawings | 1-9 |
| A | JP 09-217112 A (SUMITOMO METAL IND LTD) 19 August 1997 (1997-08-19)<br>entire text, all drawings | 1-9 |
| A | JP 2015-179023 A (WIRE DEVICE KK) 08 October 2015 (2015-10-08)<br>entire text, all drawings | 1-9 |
| A | JP 07-206132 A (OKURA YUSOKI CO LTD) 08 August 1995 (1995-08-08)<br>entire text, all drawings | 1-9 |
| A | JP 09-67009 A (OMRON CORPORATION) 11 March 1997 (1997-03-11)<br>entire text, all drawings | 1-9 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/044112**

| Patent document cited in search report | | | Publication date (day/month/year) | Patent family member(s) | Publication date (day/month/year) |
|---|---|---|---|---|---|
| JP | 11-199030 | A | 27 July 1999 | (Family: none) | |
| JP | 09-217112 | A | 19 August 1997 | (Family: none) | |
| JP | 2015-179023 | A | 08 October 2015 | (Family: none) | |
| JP | 07-206132 | A | 08 August 1995 | (Family: none) | |
| JP | 09-67009 | A | 11 March 1997 | (Family: none) | |

Form PCT/ISA/210 (patent family annex) (July 2022)

**REFERENCES CITED IN THE DESCRIPTION**

**Patent documents cited in the description**

- JP H11199030 A
- JP 2022203658 A